# EUROPÄISCHE PATENTSCHRIFT

(11) **EP 2 368 094 B1**
(45) Veröffentlichungstag und Bekanntmachung des Hinweises auf die Patenterteilung: **09.08.2017**
(21) Anmeldenummer: 09805991.8
(22) Anmeldetag: 17.11.2009
(51) Int. Cl.: G01D 5/243, G01D 5/22

(54) **SCHALTUNGSANORDNUNG UND VERFAHREN ZUM AUSWERTEN EINES SENSORS**
CIRCUIT SYSTEM AND METHOD FOR EVALUATING A SENSOR
ENSEMBLE CIRCUIT ET PROCÉDÉ DESTINÉ À L'ÉVALUATION D'UN CAPTEUR

(30) Priorität: 18.12.2008 DE 102008063527
(43) Veröffentlichungstag der Anmeldung: 28.09.2011
(73) Patentinhaber: Micro-Epsilon Messtechnik GmbH & Co. KG, 94496 Ortenburg (DE)
(72) Erfinder: PFAFFINGER, Christian, 94099 Ruhstorf (DE); MEDNIKOV, Felix, 94496 Ortenburg (DE)
(74) Vertreter: Patent- und Rechtsanwälte Ullrich & Naumann
(86) Internationale Anmeldenummer: PCT/DE2009/001608
(87) Internationale Veröffentlichungsnummer: WO 2010/069284

(56) Entgegenhaltungen:
- EP-A1- 0 166 706
- WO-A2-2008/074317
- DE-A1- 2 924 093
- DE-A1- 3 817 371
- US-A- 4 851 770

## Beschreibung

Die Erfindung betrifft eine Schaltungsanordnung zum Auswerten eines Sensors, wobei die Schaltungsanordnung zwei komplexe Impedanzen aufweist, wobei die komplexen Impedanzen jeweils Teil eines Schwingkreises sind, in dem die komplexen Impedanzen zu Schwingungen erregbar sind, wobei mindestens eine der beiden komplexen Impedanzen Bestandteil des Sensors ist, wobei ein Zähler und eine Schaltvorrichtung vorgesehen sind und wobei mit dem Zähler abwechselnd die Schwingungen einer der beiden Schwingkreise zählbar sind. Des Weiteren betrifft die Erfindung ein entsprechendes Verfahren zum Auswerten eines induktiven Sensors mittels einer Schaltungsanordnung, wobei die Schaltungsanordnung zwei komplexe Impedanzen aufweist, die jeweils Teil eines Schwingkreises sind, und wobei mindestens eine der beiden komplexen Impedanzen Bestandteil des Sensors ist.

Induktive Sensoren finden in der Praxis weitreichende Verwendung. Dabei wird die Rückwirkung eines Messobjekts auf eine Sensorspule detektiert und geeignet in ein Messsignal umgeformt. Sehr häufig werden induktive Sensoren in Form von Wirbelstromsensoren eingesetzt, die in einem sich im Einflussbereich des Sensors befindlichen, leitfähigen Messobjekt Wirbelströme induzieren, die auf die Sensorspule zurückwirken. Andere Sensoren detektieren die durch ferromagnetische Materialien hervorgerufene Änderung der Induktivität der Sensorspule. Induktive Sensoren kommen häufig als Positions- oder Näherungssensoren zum Einsatz.

Bei der Auswertung dieser Sensoren werden die Sensorspulen im Allgemeinen zu einem Schwingkreis ergänzt und zu Schwingungen angeregt. Ein zu detektierendes Messobjekt führt zu einer Änderung der Induktivität der Sensorspule, wodurch sich die Frequenz der Schwingungen ändert. Durch Detektion der Frequenzverstimmung kann auf die Annäherung oder das Vorhandensein eines Messobjekts geschlossen und je nach Ausgestaltung des Sensors eine Position und/oder Positionsänderung des Messobjekts oder die jeweils zu messende physikalische Größe bestimmt werden. Häufig erfolgt die Auswertung mittels eines PLLs (Phase-Locked Loop), der die Abweichung zwischen einer Erregerfrequenz und der Schwingfrequenz des Schwingkreises detektiert.

Nachteilig an den aus der Praxis bekannten Verfahren zur Auswertung eines induktiven Sensors ist, dass die dafür notwendigen Schaltungen im Allgemeinen relativ kompliziert aufgebaut sind. Dies bedingt zum einen eine Anfälligkeit für Fehler, zum anderen können die Auswerteschaltungen praktisch nicht im Low-Cost-Bereich eingesetzt werden. Dadurch sind manche Anwendungsbereiche, wie beispielsweise das Kraftfahrzeug, verschlossen. Insbesondere bei der Verwendung von PLL-Schaltungen macht sich zudem die hohe Temperaturempfindlichkeit negativ bemerkbar. Zudem ist die Genauigkeit der Messergebnisse von der Stabilität der Versorgungsspannung der verwendeten Schaltung abhängig, so dass aufwändige Stabilisierungsmaßnahmen notwendig werden.

Eine andere Gattung häufig eingesetzter Sensoren nutzt einen kapazitiven Effekt. Dabei wird die Rückwirkung eines Messobjekts auf die Kapazität eines Sensors detektiert. Auch hier erfolgt die Auswertung in der Regel unter Verwendung eines Schwingkreises, dessen charakteristische Werte (Frequenz, Amplitude und/oder Phase) sich durch das Messobjekt ändern. Die Änderungen werden üblicherweise durch Phasen- oder Amplitudendemodulation oder durch Frequenzmessungen bestimmt.

Nachteilig bei den bekannten Schaltungen ist, dass eine Abhängigkeit von der Versorgungsspannung gegeben ist. Daher sind aufwändige Maßnahmen notwendig, um die Versorgungsspannung ausreichend zu stabilisieren. Dies führt wiederum zu vergleichsweise aufwändigen und teuren Schaltungen, die im Low-Cost-Bereich nicht einsetzbar sind.

Die US 4,851,770 A offenbart eine berührungslos messende Sensoranordnung mit zwei Resonanzschwingkreisen. Der Sensor umfasst zwei Planarspulen, über denen ein bewegliches Element angeordnet ist. Bei Bewegen des beweglichen Elements beeinflusst dieses die Induktivität der Spulen. Ein Ende jeder Spule ist mit einer Kapazität und dem Eingang eines Pulsgenerators verbunden. Das andere Ende jeder Spule ist mit dem Kollektor eines Transistors verbunden, deren Emitter jeweils auf Masse liegen. Die Basisspannungen der Transistoren sind invertiert, so dass immer einer der Transistoren leitet während der andere sperrt. Dadurch werden die beiden Sensorspulen abwechselnd aktiviert und bilden im aktivierten Zustand zusammen mit der Kapazität einen Schwingkreis. Mit Aktivierung wird der jeweilige Schwingkreis mit einer Sprunganregung zu Schwingungen angeregt.

Der Pulsgenerator konvertiert das Signal an dem jeweils aktivierten Schwingkreis in ein Rechtecksignal, dessen Frequenz mit der des jeweils aktivierten Schwingkreises übereinstimmt. Ein Zähler am Ausgang des Pulsgenerators zählt die Flanken des Rechtecksignals. Wenn eine bestimmte Anzahl von Schwingungen erreicht ist, startet ein neuer Zählzyklus und das Ausgangssignal des Zählers wechselt. Das Ausgangssignal des Zählers dient als Steuersignal für die Transistoren und wird über eine Stufe zum Erzeugen eines differenziellen Signals aus der Schaltung ausgegeben. Die Schaltungsanordnung ist nur zur Auswertung weniger Schwingungen (im Ausführungsbeispiel zwei positive und zwei negative Flanken) geeignet.

EP 0 166 706 A1 offenbart eine Schaltung zur Auswertung von kleinen Kapazitäten von kapazitiven Sensoren. Ein Oszillator wird mittels Schalter abwechselnd auf eine Referenzkapazität und eine Sensorkapazität geschaltet. Das Steuersignal der Schalter wird durch einen Frequenzteiler aus den Schwingungen des Oszillators, dessen Flanken durch einen Schnitt-Trigger aufbereitet sind, gebildet. Das Steuersignal für die Schalter wird mit einer Aufbereitungsschaltung in ein differentielles Signal gewandelt und als differentielles Ausgangssignal der Schaltung ausgegeben.

Aus der DE 38 18 371 A1 ist eine Auswerteschaltung für einen differentiellen induktiven Geber mit zwei Sensorspulen zur Bereitstellung eines digitalen Ausgangssignals bekannt, wobei die Sensorspulen durch eine gemeinsame Kapazität zu einem LC-Schwingkreis ergänzbar sind. Die beiden Sensorspulen weisen einen gemeinsamen Anschluss auf, der mit einem von zwei Anschlüssen eines Oszillators verbunden ist. Der zweite Anschluss des Oszillators ist mit einer Schaltvorrichtung verbunden, die den Oszillator abwechselnd mit dem zweiten Anschluss einer der beiden Sensorspulen verbindet. Dadurch wird abwechselnd eine der beiden Sensorspulen zu Schwingungen angeregt. Eine Steuerungs-, Auswertungs- und Indizierungsschaltung steuert den Umschalter, wobei weitgehend offen bleibt, wie dies geschieht. Zur Erhöhung der Auflösung kann eine geeignete gleiche Zahl aufeinanderfolgender Schwingungen ausgewertet werden. DE 29 24 093 A1 offenbart einen differentiell arbeitenden, induktiven Positionssensor, bei dem zwei Spulen um einen gemeinsamen Kern gewickelt sind und ein Kurzschluss-Ring den für die jeweilige Spule aktiven Teil des Kerns definiert. Die Spulen sind mit einem Integrator verbunden. Die Ausgangsspannung des Integrators ist auf einen Schmitt-Trigger geschaltet. Das Ausgangssignal des Schmitt-Triggers versorgt über einen Schalter wechselseitig eine der beiden Spulen und wird mit einem Flip-Flop in ein Schaltsignal für den Schalter gewandelt. Das Ausgangssignal des Flip-Flops bildet zudem (eventuell noch tiefpassgefiltert) das Ausgangssignal der Schaltung.

Der vorliegenden Erfindung liegt die Aufgabe zugrunde, eine Schaltungsanordnung und ein Verfahren der eingangs genannten Art derart auszugestalten und weiterzubilden, dass die Auswertung eines induktiven oder kapazitiven Sensors oder - allgemein formuliert - die Auswertung eines Sensors mit einer komplexen Impedanz mit schaltungstechnisch einfachen Mitteln bei geringen Kosten realisiert werden kann.

Erfindungsgemäß wird die voranstehende Aufgabe durch die Merkmale des Patentanspruchs 1 gelöst. Danach ist die in Rede stehende Schaltungsanordnung dadurch gekennzeichnet, dass die Schaltvorrichtung bei Erreichen eines vorgebbaren Zählerstands schaltbar ist, wobei der Zähler bei Erreichen des vorgebbaren Zählerstandes ein Schaltsignal an die Schaltvorrichtung ausgibt, und dass das Schaltsignal der Schaltvorrichtung als pulsweiten-moduliertes Ausgangssignal der Schaltungsanordnung dient, wobei die Schwingkreise als Multivibrator ausgebildet sind, deren Zeitkonstanten durch die zugehörige komplexe Impedanz und einen Widerstand vorgegeben sind.

In verfahrensmäßiger Hinsicht ist die voranstehende Aufgabe durch die Merkmale des Patentanspruchs 8 gelöst. Danach ist das in Rede stehende Verfahren dadurch gekennzeichnet, dass mittels eines Zählers abwechselnd die Schwingungen eines der Schwingkreise gezählt werden, wobei die Schwingkreise als Multivibrator ausgebildet sind, deren Zeitkonstanten durch die zugehörige komplexe Impedanz und einen Widerstand vorgegeben sind, dass jeweils bei Erreichen eines vorgebbaren Zählerstands eine Schaltvorrichtung betätigt wird und zum Zählen der Schwingungen des anderen Schwingkreises gewechselt wird, wobei durch den Zähler bei Erreichen des vorgebbaren Zählerstands ein Schaltsignal an die Schaltvorrichtung ausgegeben wird, und dass das Schaltsignal der Schaltvorrichtung als pulsweiten-moduliertes Ausgangssignal ausgegeben wird.

Es ist zunächst erkannt worden, dass induktive und kapazitive Sensoren auf verblüffend einfache Art und Weise auswertbar sind. Dazu wird eine Schaltungsanordnung verwendet, die mindestens zwei komplexe Impedanzen aufweist. Mindestens eine der beiden komplexen Impedanzen ist Bestandteil des auszuwertenden Sensors und wird durch eine Sensorspule oder eine Kondensatoranordnung des Sensors gebildet. Beide komplexen Impedanzen sind jede für sich Teil eines Schwingkreises, der mit einer von der komplexen Impedanz abhängigen Frequenz schwingt. Die Schwingungen der beiden Spulen werden mittels eines Zählers ausgewertet. Der Zähler zählt die Anzahl der steigenden oder fallenden Flanken der Schwingungen in dem Schwingkreis. Alternativ können auch die steigenden und die fallenden Flanken oder andere die Schwingung charakterisierende Elemente, wie das Überschreiten eines Schwellwertes ausgewertet werden. Darüber hinaus ist in der Schaltungsanordnung eine Schaltvorrichtung vorgesehen, die eine abwechselnde Auszählung oder abwechselnde Erregung der Schwingkreise gewährleistet. Die Schaltvorrichtung ist derart ausgestaltet, dass sie in Abhängigkeit des Zählerstands des Zählers schaltbar ist. Das Schaltsignal der Schaltvorrichtung ist aus der Schaltungsanordnung als Ausgangssignal ausgebbar.

Beim Betreiben der Schaltungsanordnung wird erfindungsgemäß zunächst die Anzahl der Schwingungen eines der beiden Schwingkreise ausgezählt. Bei Erreichen eines vorgebbaren Zählerstands n wird die Schaltvorrichtung betätigt. Der Grenzwert des Zählerstands kann basierend auf den jeweiligen Gegebenheiten der Messung gewählt sein und von der Schwingfrequenz des Schwingkreises, der gewünschten Frequenz des Ausgangssignals, dem Grad der Belastung des Sensorsignals mit Störungen, der gewünschten Dynamik des Ausgangssignals und weiteren Randbedingungen abhängen. Zum Erreichen einer hohen Dynamik sollten kleinere Grenzwerte gewählt werden. Ein möglicher Grenzwert liegt bei 512 oder 1024 Schwingungen, um zwei mögliche Grenzwerte zu nennen, die mit digitalen Mitteln besonders einfach auszuwerten sind. Allerdings sind auch weit kleinere Werte (bis hinunter zu wenigen Schwingungen) oder weit größere Werte (bei sehr hochfrequenten Schwingungen im Schwingkreis) ebenso wie nicht binäre Werte denkbar.

Mit dem Betätigen der Schaltvorrichtung wird auf das Auszählen der Schwingungen des anderen Schwingkreises gewechselt. Bei Erreichen des Zählerstands n wird die Schaltvorrichtung erneut betätigt und auf das Auszählen des ersten Schwingkreises zurückgewechselt. Die zuvor beschriebenen Schritte beginnen erneut, so dass abwechselnd die Schwingungen des einen Schwingkreises und die Schwingungen des anderen Schwingkreises erfasst werden.

Da die Periodenlängen bei hohen Frequenzen kürzer sind als bei niedrigen Frequenzen, nimmt das Auszählen der n Schwingungen eine Zeitspanne in Anspruch, die von der Frequenz der Schwingung abhängt. Damit können auf einfachste Art und Weise die Schwingungsfrequenzen der beiden Schwingkreise in eine Beziehung zueinander gesetzt werden, indem die Summe, die Differenz oder das Verhältnis der Zeitspannen, die die Auszählung der n Schwingungen benötigt, gebildet wird. Dies kann erfindungsgemäß dadurch geschehen, dass das Schaltsignal der Schaltvorrichtung als Ausgangssignal ausgegeben wird. Dieses Schaltsignal könnte beispielsweise bei Auszählung des einen Schwingkreises einen High-Pegel annehmen, während bei Auszählung des anderen Schwingkreises ein Low-Pegel anliegt. Dadurch entsteht ein pulsweiten-moduliertes Ausgangssignal, das die gegenseitige Beziehung der Zeitspannen der Auszählungen und damit der Schwingfrequenzen der beiden Schwingkreise widerspiegelt. Aus diesen Informationen können Rückschlüsse auf die komplexe Impedanz gezogen werden, wodurch auf einfache Art und Weise die Induktivität oder Kapazität ausgewertet werden kann. Da lediglich kostengünstige Schaltungskomponenten zum Einsatz kommen, kann eine Schaltungsanordnung realisiert werden, die kostengünstig herzustellen ist. Teure und empfindliche Präzisionsbauteile werden bei der erfindungsgemäßen Schaltungsanordnung nicht benötigt.

Durch die Wahl des Grenzwertes für den Zähler kann sehr einfach der Frequenzbereich für das Ausgangssignal festgelegt werden. Hohe Grenzwerte reduzieren die Frequenz des Ausgangssignals in Bezug auf die Schwingfrequenz der Schwingkreise, bei niedrigen Grenzwerten liegen die Frequenzen relativ nahe beieinander. Die Wahl eines Grenzwertes von 512 kann beispielsweise zu einer Reduzierung der Frequenz des Ausgangssignals auf ein Tausendstel in Bezug auf die Frequenz des Schwingkreises führen. Schwingen die beiden Schwingkreise beispielsweise bei 1 MHz, so ergibt sich ein Ausgangssignal, das eine Frequenz von ca. 1 kHz aufweist. Höhere Grenzwerte führen zu einer noch stärkeren Frequenzreduzierung. Dadurch lassen sich die Kosten einer Auswertung noch weiter reduzieren.

Der Zähler kann auf die verschiedensten aus der Praxis bekannten Arten gebildet sein. Es können einfache Digitalbausteine ebenso zum Einsatz kommen, wie Mikrocontroller mit integrierten Zählern. Einzige Voraussetzung an den Zähler ist, dass die Flanken mit geeignet hoher Frequenz gezählt werden können. Dies ist jedoch einfach zu erfüllen.

Gemäß einer Ausgestaltung der Erfindung kann die zweite komplexe Impedanz der Schaltungsanordnung als Referenzimpedanz ausgebildet sein. Bei einem induktiven Sensor ist diese durch eine Referenzspule, bei einem kapazitiven Sensor durch eine Referenzkapazität gebildet. Eine Referenzspule ist vorzugsweise als Luftspule ausgestaltet. In beiden Fällen ist die Referenzimpedanz derart ausgebildet, dass sie von einem Messobjekt nicht beeinflusst wird. Diese Impedanz könnte beispielsweise zur Kompensation von Temperatureinflüssen oder Störungen durch die jeweilige Einbauumgebung dienen. Die Referenzimpedanz könnte prinzipiell beliebig angeordnet sein. Es ist prinzipiell auch eine Anordnung unterhalb der Sensorelektronik denkbar.

Vorzugsweise ist die Referenzimpedanz in ähnlicher Weise aufgebaut wie die als Sensorelement dienende erste komplexe Impedanz. Dadurch werden die beiden Impedanzen beispielsweise bezüglich temperaturbedingter Änderungen in ähnlicher Weise beeinflusst. Außerdem können die beiden Schwingkreise in ähnlicher Weise aufgebaut sein, wodurch sich ein vergleichbares Einschwingverhalten der beiden Schwingkreise ergibt.

Gemäß einer anderen Ausgestaltung der Erfindung könnte die zweite Impedanz der Schaltungsanordnung als Teil des Sensors ausgebildet sein. Der Sensor würde somit zwei Spulen oder zwei Kapazitäten aufweisen, die in Form eines differentiellen Sensors eingesetzt sein können. Dadurch ist es möglich, eine Verschiebung eines Messobjekts bezüglich der beiden Impedanzen zu detektieren. Außerdem bietet eine differentielle Anordnung die Möglichkeit, temperaturbedingte Störungen oder elektromagnetische Störungen in bekannter Weise zu eliminieren.

Bewegt sich beispielsweise bei einem induktiven Sensor das Messobjekt in einer Richtung längs der Verbindungslinie der beiden Spulen, so ändert sich der Einfluss des Messobjekts in Bezug auf beide Spulen. Während sich der Einfluss auf die eine Sensorspule reduziert, beeinflusst das Messobjekt die andere Sensorspule in stärkerem Maße. Dadurch verändern sich die Frequenzen beider Schwingkreise gegenläufig, d.h. die Frequenz des einen Schwingkreises steigt, während die Frequenz des anderen sinkt. Dadurch kommt es zu einer deutlicheren Verschiebung des Tastverhältnisses des pulsweiten-modulierten (PWM) Ausgangssignals der Schaltungsanordnung. Unter Tastverhältnis eines PWM-Signals wird das Verhältnis zwischen der Zeit eines High-Pegels und der Periodenlänge des PWM-Signals verstanden. Entsprechend Ausführungen gelten für einen kapazitiven Sensor.

Gemäß einer weiteren Ausgestaltung der Erfindung könnten die beiden zuvor beschriebenen Ausgestaltungen kombiniert sein. Dementsprechend würde die Schaltungsanordnung drei komplexe Impedanzen aufweisen, von denen zwei Impedanzen Teil des Sensors sind und eine Impedanz als Referenz fungiert. Die beiden Sensorimpedanzen könnten einen differentiellen Sensor bilden, während die Referenzimpedanz zur Kompensation herangezogen werden könnte.

Die nachfolgenden Ausführungen beziehen sich auf einen induktiven Sensor und insbesondere auf eine Ausgestaltung, die sich als besonders vorteilhaft im Zusammenhang mit der erfindungsgemäßen Schaltungsanordnung erwiesen hat. Die einzelnen aufgezeigten Aspekte gelten jedoch - auch ohne explizite Bezugnahme und soweit übertragbar - ebenso für die Verwendung eines kapazitiven Sensors. Zur Vermeidung von Wiederholungen wird auf parallele Ausführungen weitgehend verzichtet. Nachfolgend sind die komplexen Impedanzen durch Spulen gebildet.

Hinsichtlich einer Vereinfachung des Herstellungsprozesses könnten die Spulen der Schaltungsanordnung als planare Spulen ausgebildet sein. Diese Spulen könnten auf einem Substrat aufgebracht sein. Das Substrat könnte eine Leiterplatte, eine Keramik aber auch Kunststoffe, Kunststofffolien, Metallteile oder andere als Trägermaterial geeignete Stoffe sein. Einzige Voraussetzung ist, dass eine elektrische Isolation gegenüber der Spule erreicht werden kann. Dies ist im Allgemeinen jedoch auch bei metallischen Trägermaterialien einfach zu bewerkstelligen, indem eine Isolationsschicht zwischen Träger und Spule aufgebracht wird. Bei metallischen Substraten ist es zudem notwendig, dass das Trägermaterial keine ferromagnetischen Eigenschaften aufweist. Wie bereits aus der Auflistung möglicher Substrate hervorgeht, können diese starr oder flexibel ausgebildet sein. Dies erhöht wiederum die Zahl möglicher Einsatzbereiche der Schaltungsanordnung.

Die erfindungsgemäße Schaltungsanordnung liefert dann besonders gute Messergebnisse mit hoher Auflösung und Dynamik, wenn - gemäß einer ganz besonders bevorzugten Weiterbildung - eine weichmagnetische Folie oder eine weichmagnetische dünne Schicht im Einflussbereich der Sensorspule angeordnet ist, deren Permeabilität sich unter Einfluss eines Magnetfelds in Abhängigkeit der Feldstärke des Magnetfelds ändert. Dadurch stellt sich in Abhängigkeit eines externen Magnetfelds ein definierter Verlauf der Permeabilität der weichmagnetischen Folie/dünnen Schicht ein. Dies sorgt in starkem Maße für eine Veränderung der Induktivität der Spule, die wiederum zu einer starken Beeinflussung des Tastverhältnisses des pulsweiten-modulierten Ausgangssignals der Schaltungsanordnung führt. Die Änderung der Permeabilität kann bis zur Sättigung reichen, bei der die weichmagnetische Folie/dünne Schicht für Magnetfelder transparent wird. Die Wahl einer weichmagnetischen Folie oder einer weichmagnetischen dünnen Schicht wird von den jeweiligen Einsatzbedingungen und dem Herstellungsprozess abhängen. Als weichmagnetisches Material, das zur Bildung der weichmagnetischen Folie oder der weichmagnetischen dünnen Schicht eingesetzt werden kann, lassen sich amorphe oder nanokristalline Werkstoffe einsetzen.

Zur Erhöhung des Effektes könnte beidseits der Sensorspule eine weichmagnetische Folie oder eine weichmagnetische dünne Schicht angeordnet sein. Dadurch würden bei Vorhandensein eines Magneten zwei weichmagnetische Folien/dünne Schichten jeweils eine Permeabilitätsänderung erfahren, wodurch sich der Einfluss des Magneten auf die Sensorspule stark erhöht. Dabei könnte auch auf der einen Seite der Sensorspule eine weichmagnetische Folie aufgeklebt sein, während auf der anderen Seite der Sensorspule eine weichmagnetische dünne Schicht aufgebracht ist.

Hinsichtlich einer weiteren Erhöhung des Messeffekts könnte auf der der Sensorspule abgewandte Seite der weichmagnetischen Folie/dünnen Schicht eine leitfähige Schicht angeordnet sein. Verursacht ein Magnet bei der weichmagnetischen Folie/dünnen Schicht eine Permeabilitätsänderung, so kann ein von der Sensorspule erzeugtes Wechselfeld teilweise durch die weichmagnetische Folie/dünne Schicht hindurchdringen und in der leitfähigen Schicht Wirbelströme induzieren. Diese Wirbelströme erzeugen eine Rückwirkung auf die Sensorspule, die bei Vorhandensein eines externen Magnetfelds zu einer stärkeren Veränderung der Impedanz und somit zu einer stärkeren Veränderung des Tastverhältnisses des Ausgangssignals führt.

Bei Vorhandensein zweier Sensorspulen könnten bei beiden Sensorspulen einseitig oder beidseits der Spulen weichmagnetische Folien/dünne Schicht vorgesehen sein. Dabei könnte, beispielsweise bei Anordnung beider Sensorspulen in einer Ebene, eine gemeinsame weichmagnetische Folie/dünne Schicht beide Sensorspulen überdecken. Allerdings lassen sich die Folien/Schichten auch für jede der Spulen getrennt ausführen, so dass die Folien/Schichten keine Verbindung untereinander haben. Dies wird im Allgemeinen von der jeweiligen Dimensionierung des Sensors abhängen.

Bei Verwendung einer leitfähigen Schicht und einer weichmagnetischen Folie/dünnen Schicht beidseits der Sensorspule/n könnte auch die leitfähige Schicht beidseits der Sensorspule/n jeweils auf der der Sensorspule abgewandten Seiten der weichmagnetischen Folie/dünnen Schicht angeordnet sein.

Zur Verwendung dieses Sensors als Positions- oder Abstandssensor könnte das zu detektierende Messobjekt mit einem Magneten versehen sein. Dadurch wird in Abhängigkeit der Position des Messobjekts die Permeabilität der weichmagnetischen Folie/dünnen Schicht des Sensors - gegebenenfalls aber nicht notwendigerweise bis hin zur Sättigung in einem Bereich der Folie/Schicht - geändert, wodurch sich die Induktivität in Abhängigkeit der Position des Messobjekts bzw. des zugeordneten Magneten verändert.

Der dem Messobjekt zugeordnete Magnet könnte einerseits als Permanentmagnet ausgebildet sein, andererseits könnte eine mit Gleichstrom durchflossene Spule die Funktion des Magneten übernehmen. Für die Verwendung dieses Sensors ist lediglich ausschlaggebend, dass im Bereich um das Messobjekt ein Magnetfeld erzeugbar ist, das die Permeabilität der weichmagnetischen Folie bzw. der weichmagnetischen dünnen Schicht des Sensors ausreichend stark beeinflusst. Ein auf diesem Prinzip beruhender Sensor ist in der WO 2008/074317 A2 offenbart, auf deren Inhalt hiermit Bezug genommen wird.

Bei den Schwingkreisen kommt ein Multivibrator zum Einsatz, dessen Schwingfrequenz durch die Induktivität der jeweils zugehörigen Spule definiert ist. Vorteilhaft an dieser Ausgestaltung ist, dass im Vergleich zu Resonanzschwingkreisen auf die Verwendung eines zusätzlichen Kondensators, dessen Kapazität im Allgemeinen von der Temperatur beeinflusst wird, verzichtet werden kann. Ein Multivibrator kann auch bei kapazitiven Sensoren eingesetzt werden.

Vorzugsweise sind die Schwingkreise derart dimensioniert, dass sich bei gewöhnlicher Betriebssituation eine Schwingfrequenz der Schwingkreise zwischen 100 kHz und 20 MHz einstellt. Dieser Frequenzbereich erweist sich als besonders günstig, um den Sensor als Wirbelstromsensor realisieren zu können. Des Weiteren kann in diesem Bereich eine relativ hohe Auflösung der Auswerteschaltung erreicht werden. Es sind jedoch auch Frequenzen außerhalb dieses Bereichs denkbar. Trotz der relativ hohen Frequenz der Auszählung kann dennoch auf kostenintensive Maßnahmen bei der Auswertung des Ausgangssignals verzichtet werden, da die Frequenz des pulsweiten-modulierten Ausgangssignals der Schaltungsanordnung in Abhängigkeit des verwendeten Zählerstands für den Umschaltvorgang der Schaltvorrichtung wesentliche niedrigere Frequenzen annimmt.

Zur Auswertung des Ausgangssignals der Schaltungsanordnung könnte das Ausgangssignal tiefpassgefiltert werden und aus dem daraus entstehenden analogen Ausgangssignal ein das Tastverhältnis repräsentierender Analogwert gewonnen werden. Alternativ oder zusätzlich könnte direkt das Tastverhältnis, d. h. das Verhältnis zwischen einem High-Pegel des Ausgangssignals im Bezug auf die gesamte Periodenlänge des Ausgangssignals sowie die Periodenlänge des Ausgangssignals herangezogen werden.

Bei Verwendung der erfindungsgemäßen Schaltungsanordnung oder des erfindungsgemäßen Verfahrens im Zusammenhang mit einem Positionssensor könnte aus dem tiefpassgefilterten Ausgangssignal oder aus dem Tastverhältnis des Ausgangssignals die Position des Messobjekts bestimmt werden. Bei Verwendung lediglich einer Sensorspule repräsentiert die Veränderung des Ausgangssignals den Einfluss des Messobjekts auf den Sensor. Bei Verwendung zweier Sensorspulen wird durch das Tastverhältnis die Relativlage des Messobjekts zu den beiden Sensorspulen ausgegeben. Befindet sich das Messobjekt auf der Mittelebene zwischen den beiden Sensorspulen, so wird durch das Messobjekt die Induktivität beider Sensorspulen in gleicher Weise beeinflusst. Damit wird sich ein Tastverhältnis von ca. 0,5 einstellen, d. h. beide Sensorspulen schwingen mit annähernd der gleichen Frequenz. Bewegt sich das Messobjekt innerhalb der Verbindungsebene oder längs der Verbindungslinie zwischen den beiden Spulen aus dieser Mittellage heraus, so wird sich die Schwingfrequenz des einen Schwingkreises erhöhen, während sich die des anderen Schwingkreises reduziert. Dadurch verschiebt sich das Tastverhältnis in Abhängigkeit der Bewegungsrichtung zu höheren oder niedrigeren Werten. Mit einem veränderten Tastverhältnis wird sich auch das tiefpassgefilterte Ausgangssignal in seinem Wert ändern. Damit kann aus dem Tastverhältnis bzw. dem tiefpassgefilterten Ausgangssignal auf die Position des Messobjekts geschlossen werden.

Bei Ausgestaltung des Sensors mit zwei Sensorspulen kann aus der Periodenlänge des Ausgangssignals auf den Abstand des Messobjekts relativ zur Verbindungslinie zwischen den beiden Spulen geschlossen werden. In Abhängigkeit des Abstandes des Messobjekts verändert sich der Einfluss des Messobjekts auf beide Spulen gleichzeitig. Damit verändert sich die Frequenz beider Schwingkreise in Abhängigkeit des Abstandes des Messobjekts vom Sensor. Da das pulsweiten-modulierte Ausgangssignal der Schaltungsanordnung die Frequenzen der Schwingkreise repräsentiert wird sich das Ausgangssignal in Abhängigkeit des Abstands des Messobjekts vom Sensor verändern. Dies schlägt sich in der Periodenlänge des pulsweiten-modulierten Ausgangssignals nieder. Damit kann aus der Periodenlänge auf den Abstand des Messobjekts vom Sensor geschlossen werden.

Die Schaltvorrichtung der Schaltungsanordnung könnte auf verschiedene Arten Verwendung finden. Zum einen könnte die Schaltvorrichtung dazu genutzt werden, abwechselnd einer der beiden Schwingkreise zu erregen. Hierbei könnte lediglich die Energieversorgung für die Schwingkreise umgeschaltet werden. Allerdings wäre es auch denkbar, einzelne Komponenten der beiden Schwingkreise zusammenzufassen. So könnte beispielsweise die Schaltvorrichtung lediglich zwischen der ersten und der zweiten Spule hin- und herschalten, während der andere Teil der Schwingkreise, beispielsweise die übrigen Teile des Multivibrators für beide Schwingkreise gemeinsam genutzt wird.

Alternativ könnten beide Schwingkreise gleichzeitig erregt werden, während die Schaltvorrichtung abwechselnd einer der beiden Schwingkreise auf den Zähler aufschaltet. Dadurch wird zwar ein erhöhter schaltungstechnischer Aufwand notwenig, allerdings befinden sich die Schwingkreise dann immer in einem eingeschwungenen Zustand, so dass das Einschwingverhalten bei Aktivierung eines Schwingkreises nicht ins Gewicht fällt.

Welche der beiden aufgezeigten Verwendungen der Schaltungsanordnung zum Einsatz kommt, wird im Allgemeinen von dem jeweiligen Einsatzbereich abhängen. Im Low-Cost-Bereich, in dem es auf die Vermeidung unnötiger Bauteile ankommt, werden sinnvoller Weise einzelne Bauteile der Schwingkreise zusammengefasst sein.

Eine weitere Möglichkeit der Ausgestaltung besteht darin, dass die Schwingungen der beiden Schwingkreise parallel durch zwei separate Zähler gezählt werden. Damit werden die beiden unabhängigen Schwingkreise unabhängig voneinander ausgezählt. Dies führt dazu, dass die Schaltvorrichtung lediglich zwischen der Verwendung der Zählerstände des einen Zählers und des anderen Zählers hin- und herschaltet und das pulsweiten-modulierte Ausgangssignal generiert.

Bei Verwendung zweier Zähler könnte zusätzlich eine Frequenzauswertung des Ausgangssignals durchgeführt werden. Hierzu könnte die Anzahl von Schwingungen eines dritten Schwingkreises mit bekannter Frequenz zum Triggern eines Auslesens der Zählerstände der beiden anderen Zähler genutzt werden. Dazu werden mit einem dritten Zähler die Schwingungen des dritten Schwingkreises bis zu einem vorgebbaren Grenzwert gezählt. Bei dessen Erreichen werden die Zählerstände der beiden anderen Zähler ausgelesen und es wird basierend auf diesen Zählerständen die Frequenz eines oder beider Schwingkreise bestimmt. Hierzu wird das Verhältnis der Zählerstände des dritten Zählers in Bezug auf die beiden anderen Zähler bestimmt und daraus die jeweils anderen Frequenzen berechnet. Diese Auswertung könnte mittels eines Mikrocontrollers durchgeführt werden, in dem auch die Zähler realisiert sein können. Als bekannte dritte Frequenz ließe sich die Taktfrequenz des Mikrocontrollers nutzen.

Bei Realisierung der drei Zähler in einem Mikrocontroller ließen sich Bauteile einsparen. Jedoch muss die verwendete Taktfrequenz des Mikrocontrollers genügend hoch sein, um die zweistufige Zähleranordnung mit einer gewünschten Dynamik realisieren zu können. Alternativ wäre es möglich, separate Zählerbausteine und einen einfachen Mikrocontroller mit geringer Taktfrequenz zu verwenden. Durch die Verwendung von separaten Zählern in der ersten Stufe wird das Signal bereits um den gewählten Grenzwert für die Zähler, beispielsweise 1024, heruntergeteilt, so dass der Mikrocontroller mit geringerer Frequenz die Zeit der High- bzw. Low-Anteile Schaltsignals in beschriebener Weise auswerten kann.

Der Vorteil der zweistufigen Zähleranordnung ist, dass die Nutzbandbreite des Sensors verdoppelt wird, da beide Signale der beiden Oszillatoren gleichzeitig vorliegen.

In einer anderen Ausgestaltung einer Frequenzauswertung unter Verwendung zweier Zähler könnte das Verhältnis der beiden Zähler zueinander bestimmt werden. Hierzu könnten beide Zähler parallel die Schwingungen der beiden Schwingkreise zählen, wobei ein Zähler bei Erreichen eines vorgebbaren Grenzwertes das Auslesen des anderen Zählers triggert. Aus dem Verhältnis der beiden Zählerstände kann das Verhältnis der beiden Frequenzen bestimmt werden. Vorteilhafter Weise ist damit keine weitere Berechnung mehr notwendig, da unmittelbar ein Relativergebnis vorliegt. Aus der Tatsache, welcher der beiden Zähler das Auslesen des anderen Zählers getriggert hat, können Rückschlüsse darüber gezogen werden, welcher der beiden Schwingkreise schneller schwingt als der andere.

Vorteilhafter Weise wird ein Zähler bei Erreichen eines vorgegebenen Grenzwertes auf einen Startwert zurückgesetzt. Dieser wird vorteilhafter Weise bei null liegen. Es können jedoch auch beliebige andere Werte verwendet werden, die sich mit den jeweils verwendeten Zählern gut ergänzen. So könnte der Startwert auf einen Maximalwert gesetzt werden. Welcher Startwert genutzt wird, hängt nicht zuletzt davon ab, ob der Zähler aufwärts oder abwärts zählt. Beide Zählrichtungen können mit dem erfindungsgemäßen Verfahren und der erfindungsgemäßen Schaltungsanordnung genutzt werden.

Bei Verwendung mehrerer Zähler könnte bei Erreichen des Grenzwerts durch den einen Zähler jeweils die anderen Zähler ebenso zurückgesetzt werden.

Es sei klargestellt, dass als Ausgangssignal der vorgeschlagenen Schaltungsanordnung nicht nur das analoge PWM-Signal verwendet werden kann, sondern das digitale Zählersignal direkt als Maß für die beschriebenen Messgrößen ausgegeben werden kann.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 bzw. 8 nachgeordneten Patentansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig.1: ein erstes Ausführungsbeispiel einer erfindungsgemäßen Schaltungsanordnung in einer Aufsicht mit zugehörigen Beschaltungselementen,
- Fig. 2: das erste Ausführungsbeispiel in einer Seitenansicht der Sensorelemente,
- Fig. 3: die Sensorelemente gemäß Fig. 2 zusammen mit Signalverläufen, die die Auswirkung einer Bewegung eines Messobjekts in der Verbindungsebene der beiden Spulen widergeben,
- Fig. 4: die Sensorelemente gemäß Fig. 2 zusammen mit Signalverläufen, wobei hier die Auswirkungen einer Bewegung eines Messobjekts senkrecht zur Verbindungsebene in einer Mittelebene zwischen den beiden Spulen widergegeben sind,
- Fig. 5: ein zweites Ausführungsbeispiel einer erfindungsgemäßen Schaltungsanordnung,
- Fig. 6: ein Diagramm eines beispielhaften Wellenzugs mit zwei unterschiedlichen Frequenzen und
- Fig. 7: ein Diagramm mit beispielhaftem Wellenzügen mit zwei unterschiedlichen Frequenzen sowie ein sich daraus ergebendes pulsweiten-moduliertes Ausgangssignal.

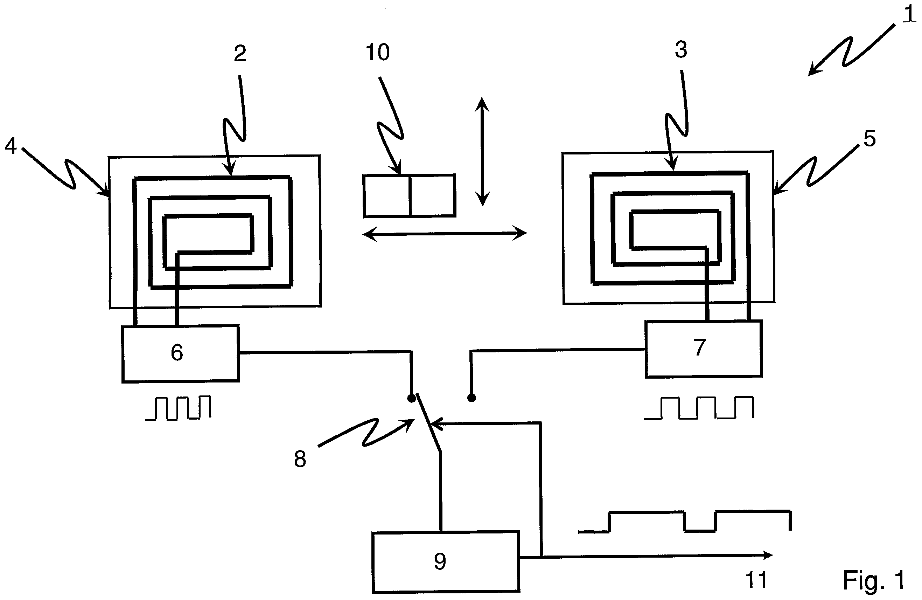

Fig. 1 zeigt ein erstes Ausführungsbeispiel einer erfindungsgemäßen Schaltungsanordnung 1. Die Schaltungsanordnung 1 weist eine erste Sensorspule 2 und eine zweite Sensorspule 3 auf. Beide Sensorspulen sind jeweils auf einer weichmagnetischen Folie 4, 5 angeordnet, so dass diese als Substrat wirken. Die Sensorspulen 2, 3 sind jeweils mit einem Oszillator 6, 7 in Form eines Multivibrators verbunden, die in Verbindung mit der zugehörigen Sensorspule 2, 3 einen ersten und einen zweiten Schwingkreis bilden. Die Schwingkreise schwingen jeweils auf einer Frequenz, die durch die Induktivität der zugeordneten Spule festgelegt ist und die aus den Oszillatoren 6, 7 jeweils nach außen gegeben werden. Diese Ausgänge werden einer Schaltvorrichtung 8 zugeführt, die die Auszählsignale der Oszillatoren 6, 7 abwechselnd auf einen Zähler 9 aufschaltet. Der Zähler erzeugt ein Schaltsignal, das an die Schaltvorrichtung 8 rückgekoppelt wird und das die Betätigung der Schaltvorrichtung steuert.

Zwischen den Sensorspulen 2, 3 ist ein Messobjekt angeordnet, dem ein Magnet 10 zugeordnet ist. Das Messobjekt ist in Fig. 1 der Übersichtlichkeit wegen nicht dargestellt. Das Messobjekt kann prinzipiell in alle drei Raumrichtungen beliebig bewegbar ausgestaltet sein. Zur Verbesserung der Messgenauigkeit ist es jedoch erstrebenswert, wenn lediglich Bewegungsrichtungen längs der Verbindungslinie zwischen Sensorspule 2, 3, also in horizontaler Richtung in der Fig. möglich sind, während Bewegung in vertikaler Richtung und senkrecht zur Zeichenebene nur in sehr geringem Ausmaße zugelassen sind. Allerdings sind das erfindungsgemäße Verfahren und die erfindungsgemäße Schaltungsanordnung auch für derartige Bewegungen prinzipiell verwendbar, wie zuvor beschrieben worden ist.

Unterhalb der Oszillatoren 6, 7 ist jeweils ein beispielhafter Wellenzug dargestellt, der die Schwingfrequenzen der Oszillatoren wiedergibt. Das sich daraus ergebende Schaltsignal, das als Ausgangssignal 11 ausgegeben wird, ist im rechten unteren Teil der Fig. 1 eingezeichnet.

Beim Betrieb der Schaltungsanordnung gemäß Fig. 1 zählt der Zähler 9 eine vorgebbare Anzahl von Schwingungen des Oszillators 6. Dies können beispielsweise 1024 Schwingungen sein. Sobald die 1024. steigende Flanke detektiert wird, ändert der Zähler 9 das Schaltsignal, wodurch die Schaltvorrichtung 8 zum Wechseln auf den anderen Eingang veranlasst wird. Ferner wird der Zähler auf den Zählerstand null zurückgesetzt. Danach zählt der Zähler 9 die Schwingungen des Oszillators 7. Sobald die 1024. steigende Flanke detektiert wird, ändert der Zähler 9 erneut das Schaltsignal für die Schaltvorrichtung 8, wodurch der Zähler 9 wieder mit dem Oszillator 6 verbunden wird und das Auszählen des ersten Schwingkreises erneut beginnt. Diese abwechselnde Auszählung wird fortwährend durchgeführt.

Aus dem Schaltsignal, das als Ausgangssignal 11 ausgegeben wird, ist zu erkennen, dass bei Auszählen des Oszillators 7 ein High-Pegel generiert wird, während bei Auszählen des Oszillators 6 das Ausgangssignal 11 einen Low-Pegel annimmt. Das Tastverhältnis dieses pulsweiten-modulierten Ausgangssignals ist abhängig von der Induktivität der beiden Sensorspulen und somit von der Position des Magneten 10. Bei Verschieben des Magneten 10 nach links erhöht die Schwingfrequenz des Oszillators 6 und die Frequenz des Oszillators 7 sinkt. Dadurch verschiebt sich das Tastverhältnis des Ausgangssignals 11.

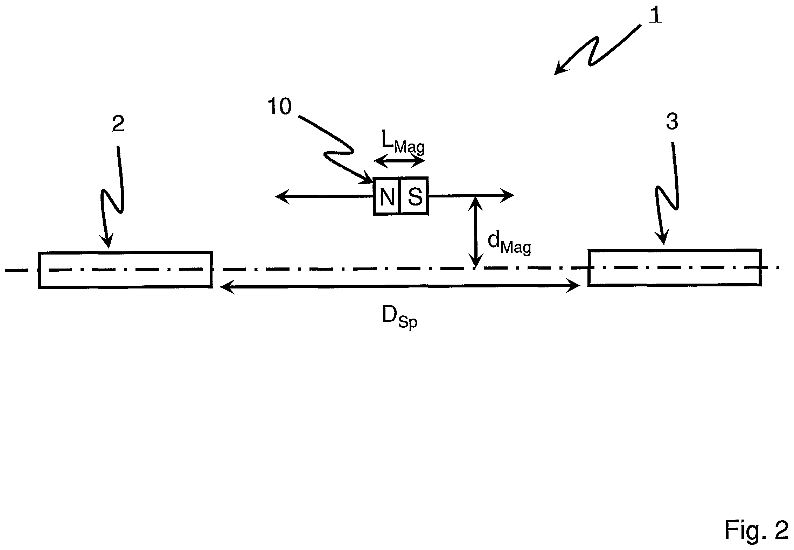

Fig. 2 zeigt den sensorischen Teil der Schaltungsanordnung gemäß Fig. 1 in einer Seitenansicht. Die Spulen 2, 3 besitzen einen Abstand D_{Sp} zueinander. Im Abstand d_{Mag} zu der Verbindungslinie zwischen der Sensorspule 2 und der Sensorspule 3 ist der Magnet 10 dargestellt, der in horizontaler Richtung bewegbar ist. Der Magnet ist derart angeordnet, dass die Magnetfeldlinien im Wesentlichen parallel zur Verbindungslinie der Spulen verlaufen. Der Sensor weist eine Länge von L_{Mag} auf. Mit diesem Sensor kann ein Messbereich von MB = D - L_{Mag} abgedeckt werden.

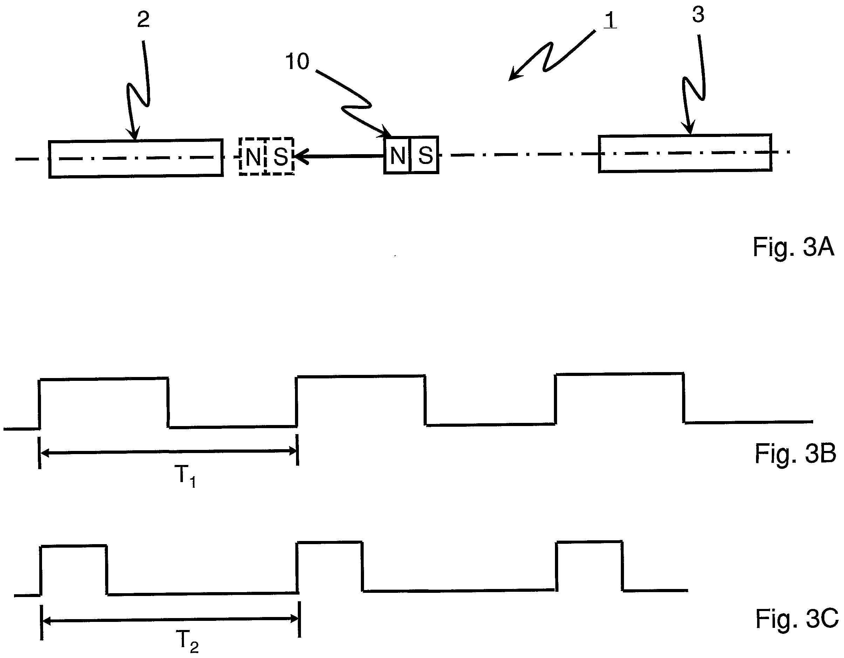

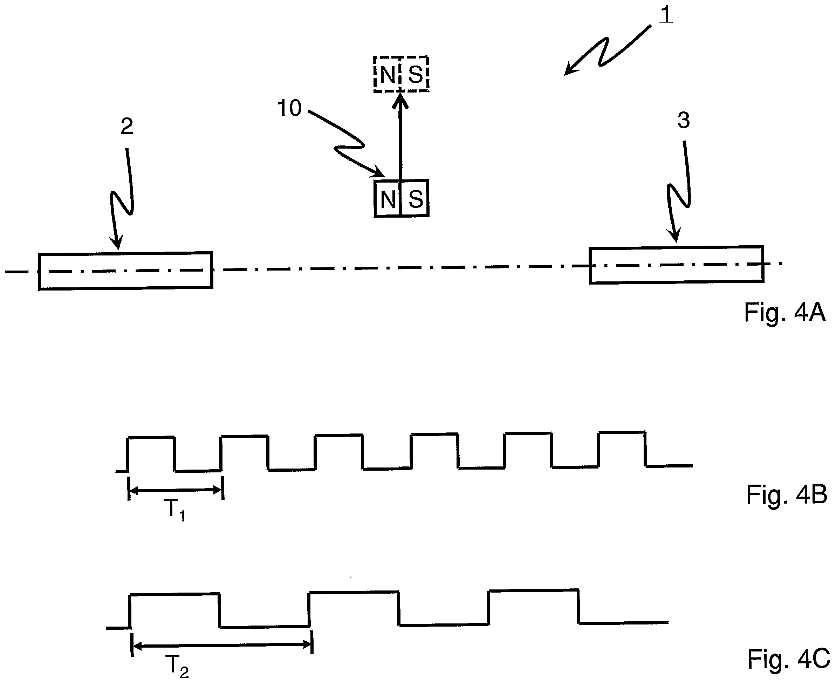

Die Fig. 3 und 4 verdeutlichen die Auswirkungen einer Bewegung längs und quer zu der Verbindungslinie zwischen den beiden Spulen bei der Sensoranordnung gemäß Fig. 2. Der Magnet 10 ist mit durchgezogenen Linien in einer ersten Position dargestellt. Mit gestrichelten Linien ist der Magnet 10 nach einer Verschiebung in eine zweite Position wiedergegeben. Der untere Teil der Figuren zeigt jeweils das pulsweiten-modulierte Ausgangssignal in der ersten Position und in der zweiten Position.

In den Fig. 3 ist dargestellt, wie sich das pulsweiten-modulierte Ausgangssignal ändert, wenn sich der Magnet aus der Mittellage in der ersten Position innerhalb der Verbindungsebene der beiden Sensorspulen 2 und 3 in Richtung der Sensorspule 2 bewegt. Die Frequenz des der Spule 2 zugeordneten Oszillators 6 steigt, während die Frequenz des Oszillators 7 sinkt. Die Zeitdauer, bis beispielsweise der Zählwert 1024 erreicht wird, wird also für den ersten Oszillator verringert, für den zweiten Oszillator erhöht. Die zugehörigen Ausgangssignale sind in Fig. 3B und 3C gezeigt. Da sich der Magnet 10 in der ersten Position in der Mittellage befindet, ergibt sich ein Tastverhältnis des Ausgangssignals von ca. 0,5. Nach Verschiebung der Magneten 10 in die zweite Position verschiebt sich das Tastverhältnis, wie Fig. 3C zu entnehmen ist. Damit ändert sich das Taktverhältnis des pulsweiten-modulierten Ausgangssignals, während die Gesamtdauer einer Periode konstant bleibt: T₁ = T₂.

In den Fig. 4 ist das Ausgangssignal dargestellt, wenn sich der Abstand des Magnetes relativ zur Verbindungsebene in der Mittelebene zwischen den Spulen 2 und 3 ändert. Fig. 4B zeigt das Ausgangssignal in der ersten Position, während Fig. 4C das Ausgangssignal in der zweiten Position darstellt. Die Frequenzen beider Oszillatoren 6 und 7 ändern sich in gleicher Weise. Dadurch bleibt das Tastverhältnis, d.h. das Verhältnis von High zu Low-Pegel konstant, während sich die Gesamtdauer einer Periode deutlich ändert: T₁ < T₂.

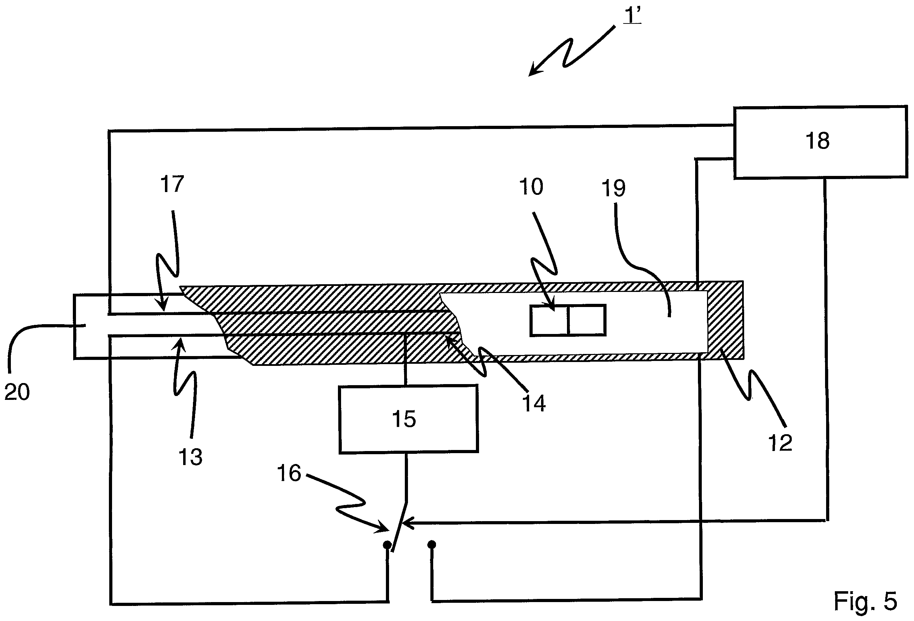

Fig. 5 zeigt ein zweites Ausführungsbeispiel einer Schaltungsanordnung 1'. Auf einem Substrat 12 ist eine Sensoranordnung aufgebracht, die nach einem transformatorischen Prinzip arbeitet. Die erste und die zweite Sensorspule sind dabei auf ein Minimum reduziert, nämlich auf zwei Leiterabschnitte 13, 14. Der erste Leiterabschnitt 13 fungiert dabei als erste Sensorspule, während der zweite Leiterabschnitt 14 als zweite Sensorspule dient. Die beiden Leiterabschnitte 13, 14 weisen einen gemeinsamen Punkt auf, der mit einem Oszillator 15 verbunden ist. Der Gegenpol des Oszillators ist mit einer Schaltvorrichtung 16 verbunden, die wechselseitig auf das andere Ende des ersten Leiterabschnitts 13 und des zweite Leiterabschnitts 14 umschaltetet.

Dem ersten und dem zweiten Leiterabschnitt 13, 14 ist ein weiterer Leiterabschnitt 17 gegenüberliegend angeordnet, der die von den ersten Leiterabschnitt 13 bzw. zweiten Leiterabschnitt 14 ausgesendeten elektromagnetischen Wellen empfängt und die entsprechenden Impulse an den Zähler 18 weiterleitet. Zur Beeinflussung der elektromagnetischen Kopplung zwischen dem ersten bzw. zweiten Leiterabschnitt 13, 14 und dem Leiterabschnitt 17 sind oberhalb und unterhalb des Substrats jeweils eine weichmagnetische Folie 19, 20 aufgebracht. Auf der Seite, auf der die Leiterabschnitte 13, 14 und 17 aufgebracht sind, ist zusätzlich eine Isolationsschicht aufgebracht, die eine elektrische Isolierung zwischen den Leiterabschnitten und der weichmagnetischen Folie herstellt.

Der Betrieb der Schaltungsanordnung verläuft entsprechend der Schaltungsanordnung gemäß Fig. 1. In einer ersten Schalterstellung wird der erste Leiterabschnitt 13 durch den Oszillator 15 zu Schwingungen angeregt. Der durch den ersten Leiterabschnitt 13 fließende Wechselstrom erzeugt ein elektromagnetisches Wechselfeld, das über die weichmagnetische Folie 19, 20 in den Leiterabschnitt 17 eingekoppelt wird. Dort induziert das Feld eine Wechselspannung gleicher Frequenz, die durch den Zähler 18 verarbeitet wird. Zähler 18 zählt die steigenden Flanken der durch Leiterabschnitt 17 empfangenen Spannung. Sobald eine vorgegebene Anzahl von Schwingungen, beispielsweise 512, durch den Zähler 18 gezählt worden ist, generiert dieser das Schaltsignal für die Schaltvorrichtung 16. Die Schaltvorrichtung 16 wechselt die Schalterstellung und versorgt danach den zweiten Leiterabschnitt 14 mit Energie. Der nun in dem zweiten Leiterabschnitt 14 fließende Wechselstrom erzeugt wiederum ein elektromagnetisches Feld, das über die weichmagnetische Folie 19, 20 in den Leiterabschnitt 17 eingekoppelt wird und dort wiederum eine Wechselspannung gleicher Frequenz erzeugt. Die steigenden Flanken dieser induzierten Wechselspannung werden wiederum durch den Zähler 18 gezählt. Nach Erreichen der vorgegebenen Anzahl von Schwingungen, in obigem Beispiel 512, ändert der Zähler wiederum das Schaltsignal für die Schaltvorrichtung 16, wodurch die Schaltvorrichtung wieder in die erste Schalterstellung zurückversetzt wird und das beschriebene Verfahren von vorne beginnt. Das durch den Zähler 18 erzeugte Schaltsignal für die Schaltvorrichtung 16 wird als Ausgangssignal 21 der Schaltungsanordnung 1' ausgegeben.

Längs der Sensoranordnung ist ein Messobjekt beweglich angeordnet, dem ein Magnet 10 zugeordnet ist, wobei die Nord-Süd-Richtung in Längsrichtung zu den Leiterabschnitten 13, 14 und 17 zeigt. Der Magnet 10 bringt die weichmagnetischen Folien 19 und 20 lokal in Sättigung oder führt zumindest zu einer erheblichen lokalen Veränderung der Permeabilität, wodurch die Folien in einem Bereich nahe dem Magneten 10 für elektromagnetische Felder teilweise durchlässig werden. Dadurch ändert sich zum einen die elektromagnetische Kopplung zwischen den Leiterabschnitten 13 bzw. 14 und 17, zum anderen ändert sich die Induktivität, die die Leiterabschnitte 13 und 14 aufweisen. Diese Änderung der Induktivität führt wiederum zu einem Verstimmen der Schwingkreise, die durch die Leiterabschnitte 13 und 14 und den Oszillator 15 gebildet werden.

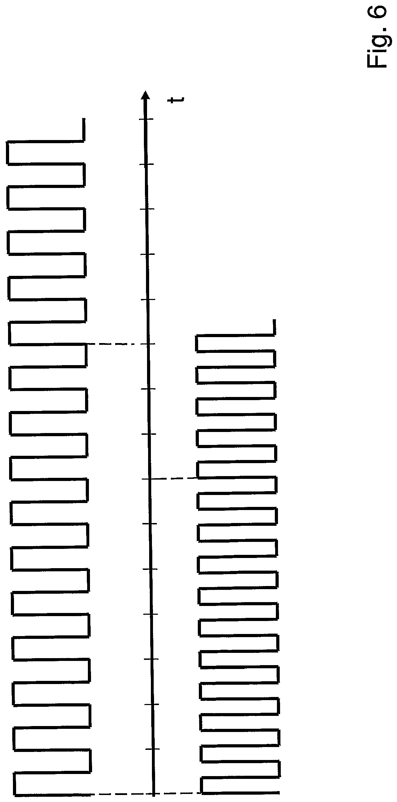

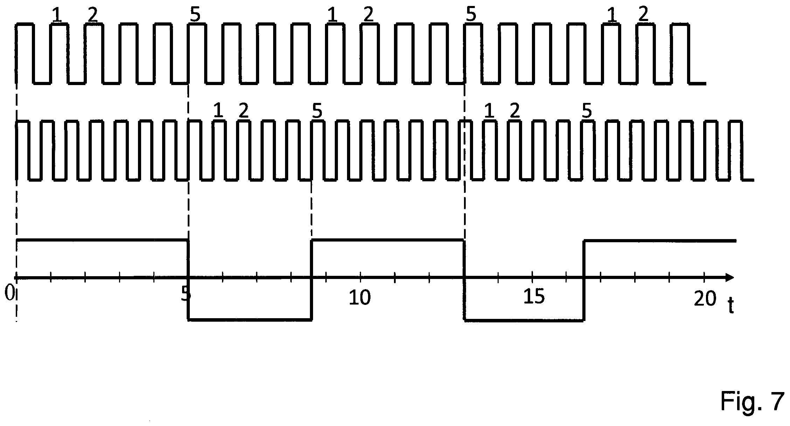

Die Fig. 6 und 7 verdeutlichen nochmals die Erzeugung des pulsweiten-modulierten Ausgangssignals 11. In Fig. 6 sind beispielhaft zwei Wellenzüge mit jeweils 15 steigenden Flanken dargestellt, wobei die obere Kurve eine geringere Frequenz als die untere Kurve aufweist. Es ist deutlich zu erkennen, dass für Schwingungen mit geringerer Frequenz eine größere Zeit in Anspruch genommen wird als für die Schwingungen mit höherer Frequenz. Dies wird bei der Erzeugung des pulsweiten-modulierten Ausgangssignals verwendet, was in Fig. 7 genauer dargestellt ist. Bei Erreichen der fünften steigenden Flanke der oberen Oszillatorkurve schaltet die Schaltvorrichtung auf die zweite Oszillatorkurve (Fig. 7 Mitte) um und zählt dort die Schwingungen. Sobald die fünfte steigende Flanke erreicht wird, wird erneut umgeschaltet und bei dem ersten Oszillator die steigenden Flanken gezählt. Bei Erreichen der fünften steigenden Flanken wird wieder umgeschaltet usw. Im Ergebnis ergibt sich ein pulsweiten-moduliertes Ausgangssignal, wie es in Fig. 7 unten dargestellt ist.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Patentansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: Schaltungsanordnung
- 2: erste Sensorspule
- 3: zweite Sensorspule
- 4: weichmagnetische Folie
- 5: weichmagnetische Folie
- 6: Oszillator (Multivibrator)
- 7: Oszillator (Multivibrator)
- 8: Schaltvorrichtung
- 9: Zähler
- 10: Magnet
- 11: Ausgangssignal
- 12: Substrat
- 13: erster Leiterabschnitt
- 14: zweiter Leiterabschnitt
- 15: Oszillator
- 16: Schaltvorrichtung
- 17: Leiterabschnitt
- 18: Zähler
- 19: weichmagnetische Folie
- 20: weichmagnetische Folie
- 21: Ausgangssignal

## Patentansprüche

1. Schaltungsanordnung zur Auswertung eines Sensors, wobei die Schaltungsanordnung zwei komplexe Impedanzen (2, 3, 13, 14) aufweist, wobei die komplexen Impedanzen (2, 3, 13, 14) jeweils Teil eines Schwingkreises sind, in dem die komplexen Impedanzen (2, 3, 13, 14) zu Schwingungen erregbar sind, wobei mindestens eine der beiden komplexen Impedanzen (2, 3, 13, 14) Bestandteil des Sensors ist, wobei ein Zähler (9, 18) und eine Schaltvorrichtung (8, 16) vorgesehen sind und wobei mit dem Zähler (9, 18) abwechselnd die Schwingungen einer der beiden Schwingkreise zählbar sind,
**dadurch gekennzeichnet, dass** die Schaltvorrichtung (8, 16) bei Erreichen eines vorgebbaren Zählerstandes schaltbar ist, wobei der Zähler (9, 18) bei Erreichen des vorgebbaren Zählerstandes ein Schaltsignal an die Schaltvorrichtung ausgibt, und dass das Schaltsignal der Schaltvorrichtung als pulsweiten-moduliertes Ausgangssignal (11, 21) der Schaltungsanordnung dient, wobei die Schwingkreise als Multivibrator (6, 7, 15) ausgebildet sind, deren Zeitkonstanten durch die zugehörige komplexe Impedanz (2, 3, 13, 14) und einen Widerstand vorgegeben sind.

2. Schaltungsanordnung nach Anspruch 1, **dadurch gekennzeichnet, dass** die zweite komplexe Impedanz als Referenzimpedanz ausgebildet ist oder
dass beide komplexe Impedanzen (2, 3, 13, 14) Bestandteil des Sensors sind, wobei der Sensor dann vorzugsweise als differentieller Sensor ausgebildet ist.

3. Schaltungsanordnung nach Anspruch 1 oder 2, **dadurch gekennzeichnet, dass** die komplexen Impedanzen durch Spulen gebildet sind, wobei die Spule/n (2, 3, 13, 14) vorzugsweise als planare Spulen ausgebildet sind.

4. Schaltungsanordnung nach Anspruch 3, **dadurch gekennzeichnet, dass** im Einflussbereich der Spule/n (2, 3, 13, 14) des Sensors eine weichmagnetische Folie (4, 5, 19, 20) oder eine weichmagnetische dünne Schicht angeordnet ist, deren Permeabilität sich unter Einfluss eines Magnetfeldes in Abhängigkeit der Feldstärke des Magnetfelds ändert,
wobei beidseits der Spule/n (2, 3, 13, 14) eine weichmagnetische Folie (4, 5, 19, 20) und/oder eine weichmagnetische dünne Schicht angeordnet sein können.

5. Schaltungsanordnung nach Anspruch 4, **dadurch gekennzeichnet, dass** auf der der Spule (2, 3, 13, 14) abgewandten Seite der weichmagnetischen Folie (4, 5, 19, 20)/dünnen Schicht eine leitfähige Schicht angeordnet ist, wobei die weichmagnetische Folie (4, 5, 19, 20)/dünne Schicht gegenüber der leitfähigen Schicht elektrisch isoliert ist.

6. Schaltungsanordnung nach einem der Ansprüche 1 bis 5, **dadurch gekennzeichnet, dass** einem zu detektierenden Messobjekt ein Magnet (10) zugeordnet ist, wobei der Magnet (10) vorzugsweise einen Permanentmagnet oder eine mit Gleichstrom durchflossene Spule umfasst.

7. Schaltungsanordnung nach einem der Ansprüche 1 bis 6, **dadurch gekennzeichnet, dass** die Komponenten der Schwingkreise derart gewählt sind, dass sich eine Frequenz zwischen 100 kHz und 20 MHz einstellt.

8. Verfahren zum Auswerten eines induktiven Sensors mittels einer Schaltungsanordnung, wobei die Schaltungsanordnung zwei komplexe Impedanzen (2, 3, 13, 14) aufweist, die jeweils Teil eines Schwingkreises sind, und wobei mindestens eine der beiden komplexen Impedanzen (2, 3, 13, 14) Bestandteil des Sensors ist,
**dadurch gekennzeichnet, dass** mittels eines Zählers (9, 18) abwechselnd die Schwingungen eines der Schwingkreise gezählt werden, wobei die Schwingkreise als Multivibrator (6, 7, 15) ausgebildet sind, deren Zeitkonstanten durch die zugehörige komplexe Impedanz (2, 3, 13, 14) und einen Widerstand vorgegeben sind, dass jeweils bei Erreichen eines vorgebbaren Zählerstands eine Schaltvorrichtung (8, 16) betätigt wird und zum Zählen der Schwingungen des anderen Schwingkreises gewechselt wird, wobei durch den Zähler bei Erreichen des vorgebbaren Zählerstands ein Schaltsignal an die Schaltvorrichtung ausgegeben wird, und dass das Schaltsignal der Schaltvorrichtung (8, 16) als pulsweiten-moduliertes Ausgangssignal (11, 21) ausgegeben wird.

9. Verfahren nach Anspruch 8, **dadurch gekennzeichnet, dass** das Verfahren im Zusammenhang mit einem Positionssensor zum Einsatz kommt, der die Position eines Messobjekts bestimmt,
dass aus dem tiefpassgefilterten Ausgangssignal oder aus dem Tastverhältnis des Ausgangssignals (11, 21) die Position des Messobjekts bestimmt werden kann und/oder
dass aus der Periodenlänge des Ausgangssignals (11, 21) der Abstand des Messobjekts vom Sensor bestimmt werden kann.

10. Verfahren nach Anspruch 8 oder 9, **dadurch gekennzeichnet, dass** die komplexen Impedanzen durch Spulen gebildet werden und dass bei einer Ausgestaltung der zweiten Spule als eine Referenzspule oder bei Vorliegen einer dritten Spule diese zur Temperaturkompensation verwendet wird.

11. Verfahren nach einem der Ansprüche 8 bis 10 **dadurch gekennzeichnet, dass** die Schaltvorrichtung zum abwechselnden Erregen der beiden Schwingkreise verwendet wird.

12. Verfahren nach einem der Ansprüche 8 bis 11, **dadurch gekennzeichnet, dass** die Schwingkreise gleichzeitig erregt werden und dass durch die Schaltvorrichtung (8, 16) abwechselnd einer der beiden Schwingkreise auf den Zähler (9, 18) aufgeschaltet wird.

13. Verfahren nach einem der Ansprüche 8 bis 12, **dadurch gekennzeichnet, dass** die Anzahl der Schwingungen der beiden Schwingkreise durch zwei Zähler (9, 18) parallel gezählt werden.

14. Verfahren nach Anspruch 13, **dadurch gekennzeichnet, dass** für eine Frequenzauswertung des Ausgangssignals (11, 21) die Anzahl von Schwingungen eines dritten Schwingkreises mit bekannter Frequenz zum Triggern eines Auslesens der Zählerstände der beiden Zähler (9, 18) genutzt wird und dass basierend auf den Zählerständen die Frequenz eines oder beider Schwingkreise bestimmt wird oder
dass für eine Frequenzauswertung des Ausgangssignals (11, 21) bei Erreichen eines vorgebbaren Grenzwertes bei einem der beiden Zähler (9, 18) der Zählerstand des anderen Zählers (18, 9) abgerufen und zur Frequenzauswertung herangezogen wird.

15. Verfahren nach einem der Ansprüche 8 bis 14, **dadurch gekennzeichnet, dass** der Zähler (9, 18) bei Erreichen des Grenzwertes auf einen Startwert zurückgesetzt wird.

## Claims

1. Circuit arrangement for evaluating a sensor, wherein the circuit arrangement has two complex impedances (2, 3, 13, 14), wherein the complex impedances (2, 3, 13, 14) are each part of an oscillating circuit in which the complex impedances (2, 3, 13, 14) can be excited to carry out oscillations, wherein at least one of the two complex impedances (2, 3, 13, 14) is a component of the sensor, wherein a counter (9, 18) and a switching device (8, 16) are provided and wherein using the counter (9, 18) the oscillations of one of the two oscillating circuits can be counted in an alternating manner, **characterised in that** the switching device (8, 16) can be switched when a predeterminable counter reading is reached, wherein the counter (9, 18) transmits a switching signal to the switching device when the predeterminable counter reading is reached, and **in that** the switching signal of the switching device acts as a pulse-width-modulated output signal (11, 21) of the circuit arrangement, wherein the oscillating circuits are constructed as multivibrators (6, 7, 15) whose time constants are predetermined by means of the associated complex impedance (2, 3, 13, 14) and a resistor.

2. Circuit arrangement according to claim 1, **characterised in that** the second complex impedance is constructed as a reference impedance or **in that** both complex impedances (2, 3, 13, 14) are components of the sensor, wherein the sensor is then preferably constructed as a differential sensor.

3. Circuit arrangement according to claim 1 or 2,
**characterised in that** the complex impedances are formed by means of coils, wherein the coils (2, 3, 13, 14) are preferably constructed as planar coils.

4. Circuit arrangement according to claim 3, **characterised in that** in the influence range of the coil(s) (2, 3, 13, 14) of the sensor, there is arranged a magnetically soft film (4, 5, 19, 20) or a magnetically soft thin layer whose permeability changes under the influence of a magnetic field in accordance with the field strength of the magnetic field,
wherein at both sides of the coil(s) (2, 3, 13, 14) a magnetically soft film (4, 5, 19, 20) and/or a magnetically soft thin layer can be arranged.

5. Circuit arrangement according to claim 4, **characterised in that** at the side of the magnetically soft film (4, 5, 19, 20)/thin layer facing away from the coil (2, 3, 13, 14) a conductive layer is arranged, wherein the magnetically soft film (4, 5, 19, 20)/thin layer is electrically insulated with respect to the conductive layer.

6. Circuit arrangement according to any one of claims 1 to 5,
**characterised in that** a magnet (10) is associated with a measurement object which is intended to be detected, wherein the magnet (10) preferably comprises a permanent magnet or a coil through which direct current flows.

7. Circuit arrangement according to any one of claims 1 to 6,
**characterised in that** the components of the oscillating circuits are selected in such a manner that a frequency between 100 kHz and 20 MHz is adjusted.

8. Method for evaluating an inductive sensor by means of a circuit arrangement, wherein the circuit arrangement has two complex impedances (2, 3, 13, 14) which are each part of an oscillating circuit, and wherein at least one of the two complex impedances (2, 3, 13, 14) is a component of the sensor,
**characterised in that** by means of a counter (9, 18) the oscillations of one of the oscillating circuits are alternately counted, wherein the oscillating circuits are constructed as multivibrators (6, 7, 15), whose time constants are predetermined by means of the associated complex impedance (2, 3, 13, 14) and a resistor, **in that**, when a predeterminable counter reading is reached, a switching device (8, 16) is activated and is changed to count the oscillations of the other oscillating circuit, wherein, as a result of the counter, when the predeterminable counter reading is reached, a switching signal is output to the switching device, and **in that** the switching signal of the switching device (8, 16) is output as a pulse-width-modulated output signal (11, 21).

9. Method according to claim 8, **characterised in that** the method is used in conjunction with a position sensor which determines the position of a measurement object,
**in that**, from the low-pass-filtered output signal or from the duty cycle of the output signal (11, 21), the position of the measurement object can be determined and/or **in that**, from the period length of the output signal (11, 21), the spacing of the measurement object from the sensor can be determined.

10. Method according to claim 8 or 9, **characterised in that** the complex impedances are formed by means of coils and **in that**, when the second coil is constructed as a reference coil or when there is a third coil, it is used for temperature compensation.

11. Method according to any one of claims 8 to 10,
**characterised in that** the switching device is used for alternately exciting the two oscillation circuits.

12. Method according to any one of claims 8 to 11,
**characterised in that** the oscillating circuits are excited at the same time and **in that**, as a result of the switching device (8, 16), one of the two oscillating circuits is alternately connected to the counter (9, 18).

13. Method according to any one of claims 8 to 12,
**characterised in that** the number of oscillations of the two oscillating circuits is counted in a parallel manner by two counters (9, 18).

14. Method according to claim 13, **characterised in that** for a frequency evaluation of the output signal (11, 21) the number of oscillations of a third oscillating circuit with a known frequency is used to trigger a read-out of the counter readings of the two counters (9, 18) and **in that**, based on the counter readings, the frequency of one or both oscillating circuits is determined or
**in that** for a frequency evaluation of the output signal (11, 21), when a predeterminable limit value is reached, in one of the two counters (9, 18) the counter reading of the other counter (18, 9) is retrieved and used for frequency evaluation.

15. Method according to any one of claims 8 to 14,
**characterised in that** the counter (9, 18) is reset to a start value when the limit value is reached.

## Revendications

1. Circuit pour l'analyse d'un capteur, ce circuit comprenant deux impédances complexes (2, 3, 13, 14), les impédances complexes (2, 3, 13, 14) faisant chacune partie d'un circuit oscillant, dans lequel les impédances complexes (2, 3, 13, 14) peuvent être excitées afin de générer des oscillations, au moins une des deux impédances complexes (2, 3, 13, 14) faisant partie du capteur, un compteur (9, 18) et un dispositif de commutation (8, 16) étant prévus et le compteur (9, 18) permettant de compter alternativement les oscillations d'un des deux circuits oscillants,
**caractérisé en ce que** le dispositif de commutation (8, 16) peut être commuté lorsqu'un état de comptage prédéterminé est atteint, le compteur (9, 18) envoyant au dispositif de commutation un signal de commutation lorsque l'état de comptage prédéterminé est atteint et **en ce que** le signal de commutation du dispositif de commutation sert de signal de sortie (11, 21) modulé à largeur d'impulsions du circuit, les circuits oscillants étant conçus comme des multi-vibrateurs (6, 7, 15), dont les constantes de temps sont prédéterminées par l'impédance complexe (2, 3, 13, 14) correspondante et une résistance.

2. Circuit selon la revendication 1, **caractérisé en ce que** la deuxième impédance complexe est conçue comme une impédance de référence ou
**en ce que** les deux impédances complexes (2, 3, 13, 14) font partie du capteur, le capteur étant alors conçu de préférence en tant que capteur différentiel.

3. Circuit selon la revendication 1 ou 2, **caractérisé en ce que** les impédances complexes sont constituées de bobines, les bobines (2, 3, 13, 14) étant conçues de préférence comme des bobines planes.

4. Circuit selon la revendication 3, **caractérisé en ce que**, dans la zone d'influence des bobines (2, 3, 13, 14) du capteur, est disposée une feuille magnétique douce (4, 5, 19, 20) ou une couche mince magnétique douce dont la perméabilité varie sous l'action d'un champ magnétique en fonction de l'intensité du champ magnétique,
une feuille magnétique douce (4, 5, 19, 20) et/ou une couche mince magnétique douce pouvant être disposées des deux côtés des bobines (2, 3, 13, 14).

5. Circuit selon la revendication 4, **caractérisé en ce que**, sur le côté, opposé à la bobine (2, 3, 13, 14), de la feuille (4, 5, 19, 20) /couche mince magnétique douce, se trouve une couche conductrice, la feuille (4, 5, 19, 20) / couche mince magnétique douce étant isolé électriquement par rapport à la couche conductrice.

6. Circuit selon l'une des revendications 1 à 5, **caractérisé en ce qu'**un aimant (10) correspond à un objet de mesure à détecter, l'aimant (10) comprenant de préférence un aimant permanent ou une bobine traversée par un courant continu.

7. Circuit selon l'une des revendications 1 à 6, **caractérisé en ce que** les composants des circuits oscillants sont sélectionnés de façon à ce qu'une fréquence entre 100 kHz et 20 MHz se règle.

8. Procédé d'analyse d'un capteur inductif au moyen d'un circuit, le circuit comprenant deux impédances complexes (2, 3, 13, 14) qui font partie chacune d'un circuit oscillant et au moins une des deux impédances complexes (2, 3, 13, 14) faisant partie du capteur,
**caractérisé en ce qu'**un compteur (9, 18) permet de compter alternativement les oscillations d'un des circuits oscillants, les circuits oscillants étant conçus comme des multi-vibrateurs (6, 7, 15), dont les constantes de temps sont prédéterminées par l'impédance complexe (2, 3, 13, 14) correspondante et une résistance, **en ce que** lorsqu'un état de comptage prédéterminé est atteint un dispositif de commutation (8, 16) est actionné et on passe au comptage des oscillations de l'autre circuit oscillant, un signal de commutation étant envoyé au dispositif de commutation par le compteur lorsqu'un état de comptage prédéterminé est atteint et **en ce que** le signal de commutation du dispositif de commutation (8, 16) est envoyé sous la forme d'un signal de sortie modulé en largeur d'impulsion (11, 21).

9. Procédé selon la revendication 8, **caractérisé en ce que** le procédé est utilisé en lien avec un capteur de position qui détermine la position d'un objet à mesurer,
**en ce que**, à partir du signal de sortie, soumis à un filtrage passe-bas ou à partir du rapport cyclique du signal de sortie (11, 21), la position de l'objet de mesure peut être déterminée et/ou
**en ce que**, à partir de la période du signal de sortie (11, 21), la distance entre l'objet de mesure et le capteur peut être déterminée.

10. Procédé selon la revendication 8 ou 9, **caractérisé en ce que** les impédances complexes sont constituées par des bobines et **en ce que**, lors d'une conception de la deuxième bobine sous la forme d'une bobine de référence lors de l'existence d'une troisième bobine, celle-ci est utilisée pour la compensation de température.

11. Procédé selon l'une des revendications 8 à 10, **caractérisé en ce que** le dispositif de commutation est utilisé pour l'excitation alternative des deux circuits oscillants.

12. Procédé selon l'une des revendications 8 à 11, **caractérisé en ce que** les circuits oscillants sont excités simultanément et **en ce que** le dispositif de commutation (8, 16) permet de brancher alternativement un des deux circuits oscillants au compteur (9, 18).

13. Procédé selon l'une des revendications 8 à 12, **caractérisé en ce que** le nombre d'oscillations des deux circuits oscillants est compté parallèlement par deux compteurs (9, 18).

14. Procédé selon la revendication 13, **caractérisé en ce que**, pour une analyse de fréquence du signal de sortie (11, 21), le nombre d'oscillations d'un troisième circuit oscillant avec une fréquence connue est utilisé pour le déclenchement d'une lecture des états de comptage des deux compteurs (9, 18) et **en ce que**, sur la base des états de comptage, la fréquence d'un circuit oscillant ou des deux circuits oscillants est déterminée ou
**en ce que**, pour une analyse de fréquence du signal de sortie (11, 21), lorsqu'une valeur limite prédéterminée est atteinte dans un des deux compteurs (9, 18), l'état de comptage de l'autre compteur (18, 9) est appelé et utilisé pour l'analyse de fréquence.

15. Procédé selon l'une des revendications 8 à 14, **caractérisé en ce que** le compteur (9, 18) est réinitialisé à une valeur initiale lorsqu'une valeur limite est atteinte.
